(19) Europäisches Patentamt
European Patent Office
Office européen des brevets

(11) **EP 4 755 191 A1**

(12) **EUROPEAN PATENT APPLICATION**
published in accordance with Art. 153(4) EPC

(43) Date of publication:
**10.06.2026 Bulletin 2026/24**

(21) Application number: 24848701.9

(22) Date of filing: **13.06.2024**

(51) International Patent Classification (IPC):
*A23B 2/00* (2025.01)     *A23B 2/42* (2025.01)
*A23L 5/00* (2016.01)     *A23J 3/00* (2006.01)
*A23J 3/26* (2006.01)     *A23L 11/00* (2025.01)

(52) Cooperative Patent Classification (CPC):
**B65B 55/14; A23L 5/00; B65B 1/04; B65B 25/001;
B65B 55/027;** A23J 3/00; A23J 3/26; A23L 11/00

(86) International application number:
**PCT/JP2024/021554**

(87) International publication number:
**WO 2025/028040 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  03.08.2023  JP 2023127271
        20.11.2023  JP 2023196747
        19.02.2024  JP 2024022952

(71) Applicant: **Toyo Seikan Co., Ltd.**
**Tokyo 141-8640 (JP)**

(72) Inventors:
• **ATSUGI, Masashi**
  **Yokohama-shi, Kanagawa 230-0001 (JP)**
• **YAMAMOTO, Shinji**
  **Yokohama-shi, Kanagawa 230-0001 (JP)**
• **SAWADA, Makoto**
  **Yokohama-shi, Kanagawa 230-0001 (JP)**

(74) Representative: **Pestalozzi, Deborah**
  **Isler & Pedrazzini AG**
  **Postfach 1772**
  **8027 Zürich (CH)**

(54) **ASEPTIC FILLING SYSTEM, AND FILLING AND PACKAGING METHOD**

(57)     Distribution of a processed food processed by using an extruder at normal temperature is enabled while a thermal history to which a material to be processed is subjected is reduced. In filling and packaging a processed food processed by using an extruder 2 in an aseptic environment, a thermal conduit 3 that is capable of being temperature-controlled to a predetermined sterilization temperature is connected to a discharge port of a barrel portion of the extruder 2, and the processed food is sterilized according to residence time during which the processed food discharged from the extruder 2 flows through the thermal conduit 3. In filling and packaging a processed food processed by using an extruder, a processing condition is adjusted so that water activity of the processed food discharged from the extruder is less than 0.94, the processed food discharged from the extruder has a temperature of 65 to 99°C and is filled and packaged into a sealable container, and an oxygen concentration in the container in which the processed food is filled and packaged is set to 1% or less.

FIG. 1

**Description**

Technical Field

The present invention relates to an aseptic filling system, and a filling and packaging method.

Background Art

Patent Document 1, for example, discloses a technique of kneading a raw material containing a protein derived from a plant, such as soybean or wheat, while heating the raw material with an extruder to produce a meat-like processed food as an alternative food to meat.
Such a meat-like processed food is preferably delivered in a dried state to be able to be distributed at normal temperature. An example of the form of distribution is a form of distribution in which a food material is supplied to a food manufacturer, rehydrated, cooked, and then provided to an end consumer as a cocked food. In a case where distribution at normal temperature is demanded, it is considered that the cocked food is filled in a sealed container, sterilized by heating under pressure, and distributed as a retort food.

Citation List

Patent Document

Patent Document 1: JP 2022-160947 A

Summary of Invention

Technical Problem

However, in such a form of distribution, the flavor of the material to be processed may be lost because the material to be processed is subjected to a thermal history in the extruder and many other thermal histories. As a result of intensive studies to enable distribution of a processed food processed by using an extruder at normal temperature while reducing the thermal history to which a material to be processed is subjected, the present inventors completed the present invention.

Solution to Problem

The aseptic filling system according to an embodiment of the present invention has a configuration in which in filling and packaging a processed food processed by using an extruder in an aseptic environment, a thermal conduit that is capable of being temperature-controlled to a predetermined sterilization temperature is connected to a discharge port of a barrel portion of the extruder, and the processed food is sterilized according to residence time during which the processed food discharged from the extruder flows through the thermal conduit.
The filling and packaging method according to an embodiment of the present invention is a filling and packaging method including: in filling and packaging a processed food processed by using an extruder; adjusting a processing condition so that water activity of the processed food discharged from the extruder is less than 0.94; filling and packaging the processed food that is discharged from the extruder and has a temperature of 65 to 99°C into a sealable container; and setting an oxygen concentration in the container in which the processed food is filled and packaged to 1% or less.
The filling and packaging method according to an embodiment of the present invention may also be a filling and packaging method including: in filling and packaging a processed food processed by using an extruder; adjusting a processing condition so that water activity of the processed food discharged from the extruder is less than 0.94; filling and packaging the processed food that is discharged from the extruder and has a temperature of 60 to 99°C into a sealable container made of an oxygen absorbing packaging material; and setting an oxygen concentration in the container in which the processed food is filled and packaged to 1% or less.

Advantageous Effects of Invention

The aseptic filling system according to an embodiment of the present invention enables, by filling and packaging a processed food discharged from an extruder in an aseptic environment after theoretically confirming that the processed food has been necessarily and sufficiently sterilized, distribution of a processed food processed by using an extruder at normal temperature while reducing the thermal history to which a material to be processed is subjected.
The filling and packaging method according to an embodiment of the present invention enables distribution of a processed food processed by using an extruder at normal temperature while reducing the thermal history to which a material to be processed is subjected.

Brief Description of Drawings

FIG. 1 is an explanatory view illustrating an outline of an exemplary aseptic filling system according to an embodiment of the present invention.

FIG. 2 is an explanatory view illustrating an example of operation of the aseptic filling system according to the embodiment of the present invention.

Description of Embodiments

Hereinafter, preferred embodiments of the present invention will be described with reference to the accompanying drawings.

Aseptic Filling System

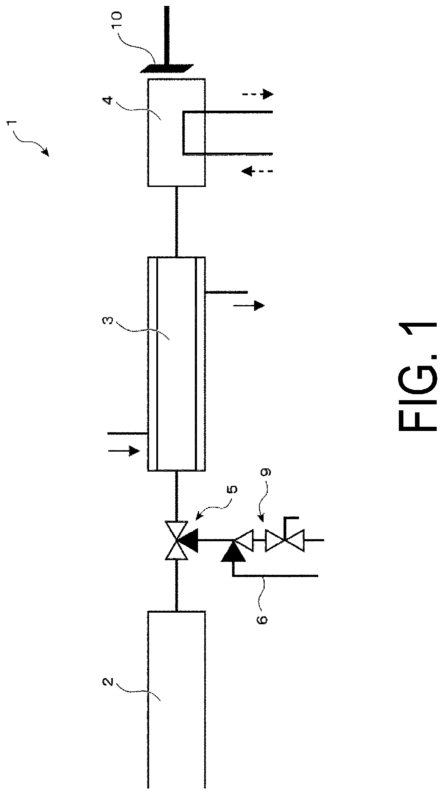

First, an aseptic filling system according to the present embodiment will be described. An aseptic filling system 1 illustrated in FIG. 1 as an example is for enabling distribution of a processed food processed by using an extruder 2 at normal temperature.

The specific configuration of the extruder 2 is not limited as long as the extruder 2 is configured to process a material to be processed by extrusion-molding the material to be processed as a raw material by compression, shearing, pulverization, heating, kneading, or the like while conveying the material to be processed, so-called extrusion cooking. The extruder 2 may be either of a single screw type or a twin screw type. The extruder 2 of a twin screw type may be either of a co-rotating type and a counter-rotating type and may be any of a non-fully intermeshing type, a partially intermeshing type, and a fully intermeshing type.

The processed food processed by using the extruder 2 is finally introduced to a cooling die 4, is cut at predetermined intervals while being extruded into any shape such as a sheet shape, and is then filled and packaged in a sealable container. These series of processes are performed in an aseptic environment. For this purpose, for example, the cooling die 4 is extended into an aseptic chamber (not illustrated) in which equipment for filling and packaging, such as a filling sealing machine or a form-fill-seal machine, is installed, allowing for the filling and packaging may be performed in an aseptic environment.

In an example illustrated in FIG. 1, the aseptic filling system 1 includes a thermal conduit 3 that is capable of being temperature-controlled to a predetermined sterilization temperature disposed between the extruder 2 and the cooling die 4, and the thermal conduit 3 is connected to a discharge port of a barrel portion of the extruder 2 via a three-way valve 5. In this way, the thermal conduit 3 is connected to the discharge port of the barrel portion of the extruder 2, and the processed food can be sterilized according to residence time during which the processed food discharged from the extruder 2 flows through the thermal conduit 3.

The thermal conduit 3 can be made temperature-controllable, for example, by having a double pipe structure configured such that steam or warm water circulates around a conduit for flowing the processed food discharged from the extruder 2. The conduit for flowing the processed food discharged from the extruder 2 is a straight pipe having a circular cross section with a constant diameter and can be configured to change the sterilization effect exerted on the processed food by adjusting the pipe length.

The cross-sectional shape of the conduit for flowing the processed food discharged from the extruder 2 is not limited to a circular shape as long as the cross-sectional area is constant.

In the current Food Sanitation Act of Japan, a standard for production of retort pouch foods excluding nonalcoholic-beverages and the like specifies that a food having pH of greater than 4.6 and water activity of greater than 0.94 is sterilized by heating under pressure according to a method in which the central portion of the food is heated at 120°C for 4 minutes or a method having an effect equal to or higher than that of the above-mentioned method. Therefore, in order to distribute a food having pH of greater than 4.6 and water activity of greater than 0.94 at normal temperature, it is considered that sterilization having an effect equal to or higher than that of the above-mentioned standard (that is, an $F_0$ value of 3.1 or more) needs to be performed.

Here, the $F_0$ value is an index of intensity of heat sterilization, and is an F value obtained from the following equation, where the reference temperature ($T_0$) is 121.1°C and the z value (z) is 10°C.

[Math. 1]

$$F\ value = t \times 1\ 0\ \widehat{}\ ((T - T_0)\ /\ z)$$

T: Temperature during heat sterilization (°C)
$T_0$: Reference temperature (°C)
t: Time (min)
Z: Temperature difference required to increase the D value (heating time for reducing the number of surviving bacteria to 1/10) by 10 times (°C)

The $F_0$ value is a time converted to the number of minutes of heating at 121.1°C, and can be obtained from the following equation as an integrated value of the holding time at a certain temperature and the sterilization rate at that temperature.

[Math. 2]

$$F_0\ value = \Sigma\ L_i \cdot \triangle t = \int 1\ 0\ \widehat{}\ ((T\ (t) - 1\ 2\ 1.\ 1)\ /\ 1\ 0)\ d\ t$$

$L_i$: Sterilization rate at temperature of i°C
t: Time point
T(t): Temperature at time point t

For example, adjusting the temperature of the thermal conduit 3 so that the sterilization temperature is 140°C and adjusting the pipe length of the thermal conduit 3 so that the residence time during which the processed food discharged from the extruder 2 flows through the thermal conduit 3 is 10.00 seconds allows the average $F_0$ value to be 12.94 (10^((140 [°C] - 121.1 [°C])/10) × (10.0 [sec]/60.0 [sec])), allowing the sterilization effect to be necessarily and sufficiently exerted on the processed food.

At this time, when the throughput of the extruder 2, that is, the amount of the processed food discharged from the extruder 2 is 0.14 kg/sec and the specific weight of the processed food is 1200 kg/m$^3$, the pipe length of the thermal conduit 3 can be adjusted as follows. That is, to set the residence time during which the processed food flows through the thermal conduit 3 to 10.00 seconds in such a case, the volume of the pipe is set to 1.16 × 10$^{-3}$m$^3$ ((0.14 [kg/sec]/1200 [kg/m$^3$]) × 10.00 [sec]). Therefore, for example, the conduit for flowing the processed food discharged from the extruder 2 having a diameter of 30 mm allows the above-mentioned $F_0$ value to be achieved by adjusting the pipe length of the conduit to 1.64 m (1.16 × 10$^{-3}$ [m$^3$]/((30 [mm]/2)$^2$ × $\pi$)).

In this way, according to the present embodiment in which the processed food discharged from the extruder 2 is sterilized according to the residence time during which the processed food flows through the thermal conduit 3 adjusted to the predetermined sterilization temperature, the sterilization effect exerted on the processed food can be theoretically confirmed. Therefore, appropriately adjusting the set temperature and the pipe length of the thermal conduit 3 and filling and packaging the processed food discharged from the extruder 2 in an aseptic environment after theoretically confirming that the processed food has been necessarily and sufficiently sterilized enables distribution of the processed food at normal temperature. As a result, for example, the drying treatment in the form of distribution exemplified as the background art can be omitted, and the thermal history to which the material to be processed is subjected can be reduced.

Next, operation of the aseptic filling system according to the present embodiment will be described.

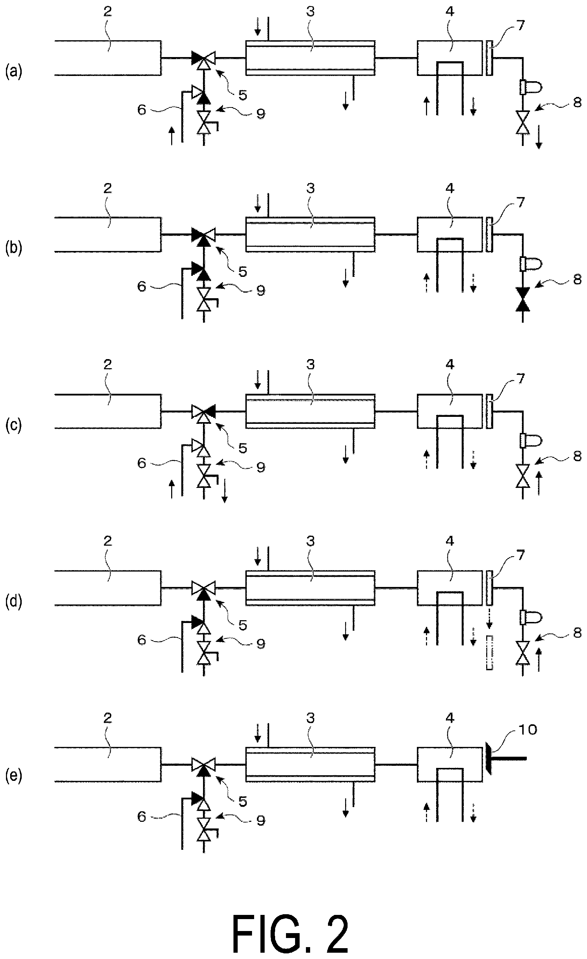

FIG. 2 is an explanatory view illustrating an example of operation of the aseptic filling system according to the present embodiment.

SIP (Equipment Sterilization)

In order to sterilize a path through which the processed food discharged from the extruder 2 flows in the order of the thermal conduit 3 and the cooling die 4, the three-way valve 5 is switched as illustrated in the drawing to supply steam from a steam introduction pipe 6. At this time, the outlet temperature of the thermal conduit 3 and the outlet temperature of the cooling die 4 are monitored while circulating steam or warm water in temperature control circuits each provided in the thermal conduit 3 and the cooling die 4. Then, while confirming that the outlet temperatures have reached the set temperatures, the supply of steam is continued until a predetermined time is elapsed (see FIG. 2(a)).

[SIP Cooling]

After the sterilization treatment is completed, the supply of steam from the steam introduction pipe 6 is stopped, and at the same time, the three-way valve 5 is switched as illustrated in the drawing. At the same time, a drain valve 8 on a CIP cap 7 side is closed to close the above-mentioned path. At this time, the temperature control circuit provided in the thermal conduit 3 is made to keep circulating steam or warm water, and cooling water is circulated in the temperature control circuit provided in the cooling die 4 (see FIG. 2(b)).

[Initial Ejection]

After the operation of the extruder 2 is started, the three-way valve 5 and the like are switched as illustrated in the drawing until the temperature and pressure rise to predetermined values, and the processed food discharged from the extruder 2 is ejected via a back pressure valve 9. At this time, steam is supplied from the steam introduction pipe 6 as necessary, and the processed food is ejected under back pressure. At the same time, a sterilized gas such as sterile nitrogen or steam is supplied from the CIP cap 7 side to apply a back pressure to the thermal conduit 3 and the cooling die 4 (see FIG. 2(c)).

Transition to Production

When it is confirmed that the temperature of the thermal conduit 3 has reached the sterilization temperature, the three-way valve 5 is switched as illustrated in the drawing so that the processed food discharged from the extruder 2 flows through the thermal conduit 3 and the cooling die 4 in this order. Then, when the internal pressure of the cooling die 4 starts to rise, the CIP cap 7 is removed from the cooling die 4 and retracted (see FIG. 2(d)).

Production

After the CIP cap 7 is retracted, a cutter 10 is immediately operated to start production (see FIG. 2(e)).

Filling and Packaging Method

Next, the filling and packaging method according to the present embodiment will be described. The method is for enabling distribution of a processed food processed by using an extruder at normal temperature.

The specific configuration of the extruder is not limited as long as the extruder is configured to process a material to be processed by extrusion-molding the material to be processed as a raw material by compression, shearing, pulverization, heating, kneading, or the like while conveying the material to be processed, so-called extrusion cooking. The extruder 2 may be either of a single screw type or a twin screw type. The extruder 2 of a twin screw type may be either of a co-rotating type and a counter-rotating type and may be any of a non-fully intermeshing type, a partially intermeshing type, and a fully intermeshing type.

The processed food processed by using the extruder is cut at predetermined intervals while being extruded into any shape such as a sheet shape from a die attached to a discharge port of a barrel portion, and then filled and packaged in a sealable container. These series of processes are preferably performed in an aseptic environment. For this purpose, for example, the die is extended in an aseptic chamber in which equipment for filling and packaging, such as a filling sealing machine or a form-fill-seal machine, is installed, allowing for the filling and packaging in an aseptic environment.

The water activity at which many food poisoning bacteria can grow is 0.94 or more, while the lower limit of the water activity at which molds can grow is defined as 0.60. From such a viewpoint, in the present embodiment, the processing condition are adjusted so that the water activity of the processed food discharged from the extruder is less than 0.94, preferably 0.90 or less, and more preferably 0.85 or less to create an environment in which the growth of food poisoning bacteria is inhibited and suppress entry of molds, allowing for distribution of the processed food processed by using an extruder at normal temperature.

Molds are weak against heat, and it is said that most of the molds are killed by heating at 60°C for about 10 minutes. From such a viewpoint, to suppress entry of molds in filling and packaging the processed food processed by using an extruder, the processed food that is discharged from the extruder and has a temperature of 65 to 99°C is filled and packaged into a sealable container. This maintains the temperature at the temperature at which molds are killed until the predetermined time elapses after the processed food is filled and packaged to more reliably kill the molds, allowing for suppressing entry of molds into the container. Reducing the oxygen concentration in the container to 1% or less, preferably 0.1% or less, allows, even if molds enter the container, the growth of molds to be suppressed.

In order to reduce the oxygen concentration in the container, filling and packaging may be performed by gas replacement packaging in which the processed food is filled and packaged while the air in the container is replaced with an inert gas such as nitrogen. It is also effective to use a container made of an oxygen absorbing packaging material (for example, OXDEC (registered trademark) manufactured by Toyo Seikan Co., Ltd.) or to enclose an oxygen-absorbing agent in the container in order to reduce the oxygen concentration in the container.

Using a container made of an oxygen absorbing packaging material absorbs oxygen remaining in the container after the processed food is filled and packaged, allowing the oxygen concentration in the container to be further reduced with time. Accordingly, the growth of molds is inhibited in an environment with a lower oxygen concentration, and thus the growth of molds can be controlled even in the case where the temperature of the processed food discharged from the extruder when being filled and packaged in a container is set to 60 to 99°C.

The present embodiment enables distribution of a processed food processed by using an extruder at normal temperature. As a result, for example, the drying treatment in the form of distribution exemplified as the background art can be omitted, and the thermal history to which the material to be processed is subjected can be reduced.

Examples

Hereinafter, the filling and packaging method according to an embodiment of the present invention will be described in more detail with reference to specific examples.

[Example 1]

A soybean processed food was processed by using a twin screw extruder while the processing condition was adjusted so that the water activity was 0.85, and the soybean processed food discharged from the extruder was filled in an aluminum laminated pouch at a food temperature of 65°C. Then, the pouch was sealed with gas replacement using nitrogen gas so that the oxygen concentration in the pouch was 1%, thereby preparing a sample containing the soybean processed food filled and packaged in the pouch. The sample thus prepared was isothermally stored at normal temperature (25°C), the filled and packaged soybean processed food was observed after a lapse of one month, but no growth of molds was observed.

[Example 2]

A soybean processed food was processed by using a twin screw extruder while the processing condition was adjusted so that the water activity was 0.85, and the soybean processed food discharged from the extruder was filled in a pouch made of an oxygen absorbing packaging material and having an oxygen absorbing function at a food temperature of 60°C. Then, the pouch was sealed with gas replacement using nitrogen gas so that the oxygen concentration in the pouch was 1%, thereby preparing a sample containing the soybean processed food filled and packaged in the pouch. The sample thus prepared was isothermally stored at normal temperature (25°C), the filled and packaged soybean processed food was observed after a lapse of one month, but no growth of molds was observed.

[Example 3]

A soybean processed food was processed by using a twin screw extruder while the processing condition was adjusted so that the water activity was 0.85, and the soybean processed food discharged from the extruder was filled in an aluminum laminated pouch at a food temperature of 65°C in an aseptic environment in a clean bench. Then, the pouch was sealed with gas replacement using nitrogen gas so that the oxygen concentration in the pouch was 1%, thereby preparing a sample containing the soybean processed food filled and packaged in the pouch. The sample thus prepared was isothermally stored at normal temperature (25°C), the filled and packaged soybean processed food was observed after a lapse of one month, but no growth of molds was observed.

[Comparative Example 1]

A soybean processed food was processed by using a twin screw extruder while the processing condition was adjusted so that the water activity was 0.85, and the soybean processed food discharged from the extruder was filled in an aluminum laminated pouch at a food temperature of 25°C. Then, the pouch was sealed without adjustment of the oxygen concentration by gas replacement, thereby preparing a sample containing the soybean processed food filled and packaged in the pouch. The sample thus prepared was isothermally stored at normal temperature (25°C), the filled and packaged soybean processed food was observed after a lapse of one month, and growth of molds was observed.

[Comparative Example 2]

A soybean processed food was processed by using a twin screw extruder while the processing condition was adjusted so that the water activity was 0.85, and the soybean processed food discharged from the extruder was filled in an aluminum laminated pouch at a food temperature of 60°C. Then, the pouch was sealed with gas replacement using nitrogen gas so that the oxygen concentration in the pouch was 1%, thereby preparing a sample containing the soybean processed food filled and packaged in the pouch. The sample thus prepared was isothermally stored at normal temperature (25°C), the filled and packaged soybean processed food was observed after a lapse of one month, and growth of molds was observed.

Although the present invention has been described above with reference to the preferred embodiments, the present invention is not limited only to the embodiments described above, and it goes without saying that various modifications can be made within the scope of the present invention.

The present invention can be suitably applied to meat-like processed foods made of plant-derived proteins, but is not limited thereto. The present invention can be applied to various processed foods processed by extrusion cooking.

Reference Signs List

1 Aseptic filling system
2 Extruder
3 Thermal conduit

**Claims**

1. An aseptic filling system, in which

   in filling and packaging a processed food processed by using an extruder in an aseptic environment,
   a thermal conduit that is capable of being temperature-controlled to a predetermined sterilization temperature is connected to a discharge port of a barrel portion of the extruder, and
   the processed food is sterilized according to residence time during which the processed food discharged from the extruder flows through the thermal conduit.

2. A filling and packaging method comprising:

   in filling and packaging a processed food processed by using an extruder,
   adjusting a processing condition so that water activity of the processed food discharged from the extruder is less than 0.94;
   filling and packaging the processed food that is discharged from the extruder and has a temperature of 65 to 99°C into a sealable container; and
   setting an oxygen concentration in the container in which the processed food is filled and packaged to 1% or less.

3. The filling and packaging method according to claim 2, wherein the container is made of an oxygen absorbing packaging material.

4. A filling and packaging method comprising:
   in filling and packaging a processed food processed by using an extruder,

   adjusting a processing condition so that water activity of the processed food discharged from the extruder is less than 0.94;
   filling and packaging the processed food that is discharged from the extruder and has a temperature of 60 to 99°C into a sealable container made of an oxygen absorbing packaging material; and
   setting an oxygen concentration in the container in which the processed food is filled and packaged to 1% or less.

5. The filling and packaging method according to any one of claims 2 to 4, wherein the processed food discharged from the extruder is filled and packaged in the container in an aseptic environment.

FIG. 1

EP 4 755 191 A1

# FIG. 2

## INTERNATIONAL SEARCH REPORT

| | International application No. |
|---|---|
| | **PCT/JP2024/021554** |

**A. CLASSIFICATION OF SUBJECT MATTER**

*A23L 3/00*(2006.01)i; *A23L 3/18*(2006.01)i; *A23L 5/00*(2016.01)i; *A23J 3/00*(2006.01)n; *A23J 3/26*(2006.01)n; *A23L 11/00*(2021.01)n

FI: A23L3/00 101Z; A23L3/18; A23L5/00 G; A23J3/26 501; A23J3/00 502; A23L11/00 Z

According to International Patent Classification (IPC) or to both national classification and IPC

**B. FIELDS SEARCHED**

Minimum documentation searched (classification system followed by classification symbols)

A23L3/00; A23L3/18; A23L5/00; A23J3/00; A23J3/26; A23L11/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 09-285263 A (HOUSE FOODS CORPORATION) 04 November 1997 (1997-11-04) claims, paragraphs [0014], [0017], examples | 1 |
| X | JP 2020-202851 A (MARS INC.) 24 December 2020 (2020-12-24) claims, paragraphs [0003], [0020], [0022], [0035] | 1-2, 4-5 |
| Y | | 3 |
| X | JP 2020-018279 A (VERSO FOOD OY) 06 February 2020 (2020-02-06) claims, paragraphs [0051]-[0055] | 1 |
| X | JP 11-155521 A (HOUSE FOODS CORPORATION) 15 June 1999 (1999-06-15) claims, examples | 2, 4-5 |
| Y | | 3 |
| Y | JP 2014-205836 A (TOPPAN PRINTING CO., LTD.) 30 October 2014 (2014-10-30) paragraphs [0002]-[0013] | 3 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 August 2024** | **03 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/021554** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 04-079955 A (MITSUBISHI KAKOKI KK) 13 March 1992 (1992-03-13)<br>      entire text | 1-5 |
| A | JP 63-123345 A (NORINSUISANSHO SHOKUHIN SOGO KENKYUSHOCHO) 27 May 1988 (1988-05-27)<br>      entire text | 1-5 |
| A | JP 61-249342 A (TECH RES ASSOC EXTRU COOK FOOD IND) 06 November 1986 (1986-11-06)<br>      entire text | 1-5 |
| A | JP 07-031428 A (HOKKAIDO PREFECTURE) 03 February 1995 (1995-02-03)<br>      entire text | 1-5 |

Form PCT/ISA/210 (second sheet) (July 2022)

## INTERNATIONAL SEARCH REPORT
### Information on patent family members

International application No.

**PCT/JP2024/021554**

| Patent document cited in search report | | | Publication date (day/month/year) | Patent family member(s) | | | Publication date (day/month/year) |
|---|---|---|---|---|---|---|---|
| JP | 09-285263 | A | 04 November 1997 | (Family: none) | | | |
| JP | 2020-202851 | A | 24 December 2020 | US | 2015/0367972 | A1 | |
| | | | | claims, paragraphs [0003], [0020], [0022], [0035] | | | |
| | | | | WO | 2014/122072 | A1 | |
| | | | | EP | 2762412 | A1 | |
| | | | | CA | 2898643 | A | |
| | | | | AU | 2014214129 | A | |
| | | | | CN | 104968569 | A | |
| | | | | MX | 2015010014 | A | |
| | | | | RU | 2015137792 | A | |
| | | | | ES | 2628618 | T | |
| | | | | PL | 2762412 | T | |
| | | | | AU | 2018202969 | A | |
| | | | | RU | 2018111236 | A | |
| | | | | ES | 2714155 | T | |
| | | | | PL | 3124388 | T | |
| | | | | MX | 2020012995 | A | |
| JP | 2020-018279 | A | 06 February 2020 | US | 2019/0364925 | A1 | |
| | | | | claims, paragraphs [0038]-[0041] | | | |
| | | | | WO | 2019/233836 | A1 | |
| | | | | EP | 3578053 | A1 | |
| | | | | CN | 112203522 | A | |
| | | | | KR | 10-2021-0006997 | A | |
| | | | | LT | 3578053 | T | |
| | | | | DK | 3578053 | T | |
| | | | | RS | 61006 | B | |
| | | | | CA | 3101243 | A | |
| | | | | HR | P20201755 | T | |
| | | | | SI | 3578053 | T | |
| | | | | PL | 3578053 | T | |
| | | | | HU | E051703 | T | |
| | | | | BR | 112020024778 | A | |
| | | | | ES | 2828354 | T | |
| | | | | CY | 1123656 | T | |
| JP | 11-155521 | A | 15 June 1999 | (Family: none) | | | |
| JP | 2014-205836 | A | 30 October 2014 | (Family: none) | | | |
| JP | 04-079955 | A | 13 March 1992 | (Family: none) | | | |
| JP | 63-123345 | A | 27 May 1988 | US | 4740379 | A | |
| | | | | entire text | | | |
| JP | 61-249342 | A | 06 November 1986 | (Family: none) | | | |
| JP | 07-031428 | A | 03 February 1995 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022160947 A